Europäisches Patentamt

European Patent Office

Office européen des brevets

(19)

(11) Numéro de publication: **0 039 257**
**B1**

(12) **FASCICULE DE BREVET EUROPEEN**

(45) Date de publication du fascicule du brevet:
23.11.83

(51) Int. Cl.³: **A 23 C 19/09**

(21) Numéro de dépôt: **81400412.3**

(22) Date de dépôt: **17.03.81**

(54) **Fromage roulé et son procédé de fabrication.**

(30) Priorité: **08.04.80 FR 8007844**

(43) Date de publication de la demande:
**04.11.81 Bulletin 81/44**

(45) Mention de la délivrance du brevet:
**23.11.83 Bulletin 83/47**

(84) Etats contractants désignés:
**AT CH DE GB LI NL**

(56) Documents cités:
**DE - A - 1 911 053**
**DE - C - 836 138**
**FR - A - 1 039 039**
**FR - A - 1 301 264**
**FR - A - 1 574 873**
**FR - A - 2 028 704**
**US - A - 3 904 772**

**J.G. DAVIS "Cheese", vol. III, 1976, Churchill Livvingstone Londres, GB "Manufacturing Methods", pages 831-832**

(73) Titulaire: **LAITERIES HUBERT TRIBALLAT, Rians, F-18220 Les Aix D'Angillon (FR)**

(72) Inventeur: **Caille, Michel, Route du Poirion Sainte Solange, F-18220 Les Aix d'Angillon (FR)**

(74) Mandataire: **Flechner, Willy, CABINET FLECHNER 22, Avenue de Friedland, F-75008 Paris (FR)**

## Fromage roulé et son procédé de fabrication

Pour préparer un fromage persillé d'herbes, on sait malaxer un mélange de pâte fraîche ou molle et d'herbes. La répartition des herbes, finement divisées dans la masse, est excellente. Mais ce malaxage donne une pâte brisée, qui devient granuleuse et collante en s'émiettant à la coupe et qui est peu appréciée des consommateurs.

Dans le Certificat d'Utilité français N° 78.34570, on décrit un fromage en bloc formé de fromage fondu et d'une couche de fromage naturel. Le fromage fondu retient la couche de fromage naturel plus friable. Le bloc de fromage n'est pas du goût des amateurs de fromages naturels ou à pâte fraîche ou molle qui n'ont pas subi de malaxage ou de cuisson. Il ne contient pas non plus de matière non lactée ou d'épice telle que du poivre, des herbes, des noix, noisettes ou amandes broyées, des raisins secs, etc.

Dans le brevet français N° 1039039, on décrit des fromages à croûte et masse superposées. Le consommateur peut ne pas aimer les fromages à croûte. S'il aime la croûte, celle-ci n'est pas bien répartie dans la masse, puisqu'elle s'étend suivant des plans parallèles entre eux. Entre les plans qui peuvent être des plans de coupe du fromage, pour le consommateur il n'y a pas de croûte.

L'invention pallie ces inconvénients par un fromage à pâte fraîche ou à pâte molle qui n'a subi aucun malaxage ni cuisson, de sorte que ses qualités gustatives et de présentation restent intactes et qui, pourtant, est aromatisé par une épice suffisamment répartie dans la masse mais qui, cependant, se trouve côte à côte avec le fromage, de sorte que le goût doux du fromage et celui relevé des herbes sont ressentis séparément alors que, dans un produit malaxé, les deux parfums se mêlent en un seul.

D'autre part, la réalisation d'un fromage ail et fines herbes non pétri permet d'obtenir une pâte plus ferme qu'habituellement. Ce fromage peut donc se placer sans difficulté sur un plateau à fromages contrairement aux aulx et fines herbes pétris.

Le fromage suivant l'invention, à pâte fraîche ou à pâte molle, incorpore une nappe d'épice enroulée en spirale et en contact avec la couche de pâte enroulée aussi en une spirale entourant celle de la nappe à la manière d'un gâteau roulé.

La variation régulière de la longueur du rayon polaire de la spirale de la nappe assure une répartition suffisamment homogène de l'épice dans le fromage pour qu'il s'en trouve dans chaque bouchée dégustée. Mais, comme l'épice n'a pas à être finement divisée et répartie dans la masse de la pâte, on peut faire en sorte que la pâte ne soit ni malaxée ni même brisée.

Pour certaines pâtes, il peut arriver que la couche de pâte ne se maintienne pas initialement d'elle-même en spirale. On pallie cet inconvénient par une enveloppe, non comestible ou comestible, maintenant la spire extérieure de la couche en pâte et pouvant servir, en outre, d'emballage protégeant le fromage.

On préfère tout particulièrement le fromage roulé à pâte fraîche.

L'invention vise également un procédé de préparation du fromage roulé qui consiste à former une couche d'un seul tenant, non brisée et non malaxée, de pâte fraîche ou de pâte molle, et qui est caractérisé en ce qu'il consiste à déposer une nappe d'épice sur la couche et à enrouler en spirale la couche et la nappe.

De préférence, on effectue cet enroulement alors que le fromage a encore un taux d'humidité supérieur à celui qui convient pour sa consommation. Lorsque le fromage a ainsi un tel taux d'humidité, il s'enroule plus facilement. C'est ainsi, par exemple, que l'extrait sec du caillé au moment du roulage peut être inférieur à 40% et, de préférence, inférieur à 38% et, notamment, égal à environ 35%.

Par l'expression d'épice, on entend toute matière comestible non lactée, tandis que l'expression de nappe n'exclut pas la possibilité d'un lit d'épice concassée en morceaux plus ou moins épais ou même de morceaux discrets, encore qu'il soit préférable que la nappe soit mince et régulière. Même dans le cas de morceaux, on obtient une répartition de ceux-ci, par incrustation dans la couche de pâte, suivant une spirale incomplète, bien supérieure à celle qui résulte de leur seule incrustation à la surface supérieure d'un fromage, tandis qu'une incorporation au sein de la masse nécessiterait de la briser.

Au dessin annexé, donné uniquement à titre d'exemple:

la fig. 1 est une vue en perspective d'un fromage suivant l'invention, tandis que

les fig. 2 à 4 illustrent trois stades du procédé de préparation d'un fromage suivant l'invention.

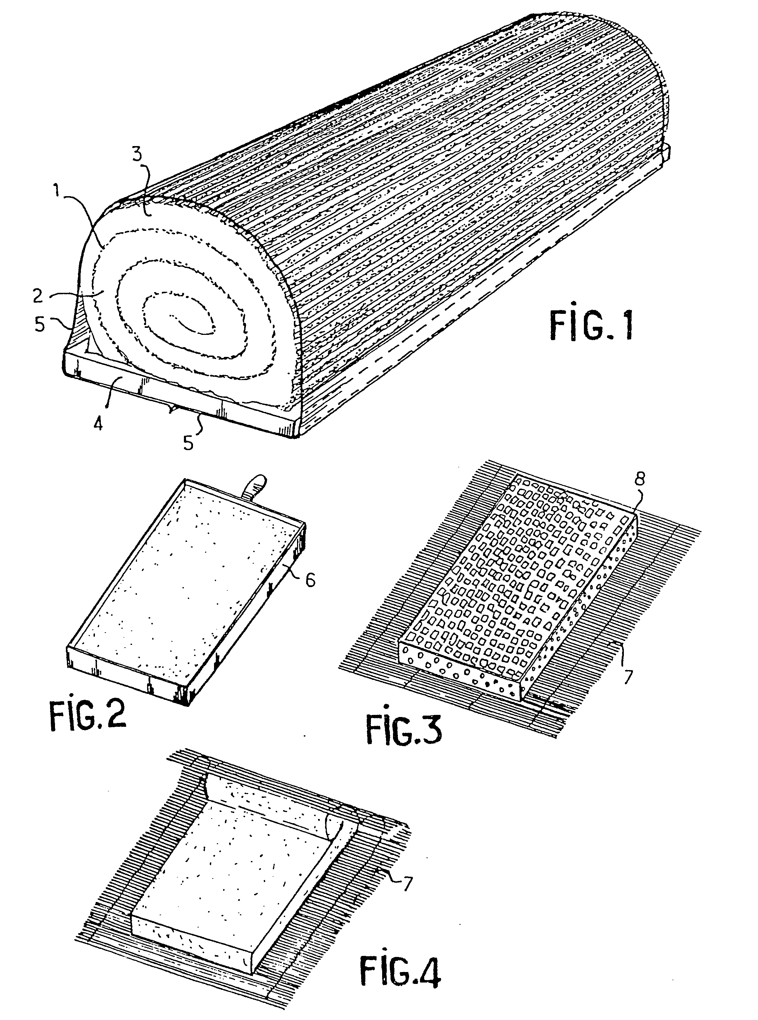

Le fromage de la fig. 1 comprend une nappe 1 d'épice enroulée en spirale et une couche 2 de pâte fraîche enroulée en spirale autour de la nappe 1 et en contact avec celle-ci. On peut entourer la face extérieure du fromage d'une nappe 3 d'épice. La face inférieure du fromage repose sur une plaque en polystyrène. La plaque 4 et le fromage sont enveloppé ensemble par une enveloppe 5 en une pellicule thermorétractable. La ligne de thermosoudure de l'enveloppe s'étend sous la plaque 4. On pourrait aussi prévoir une enveloppe en papier d'aluminium ou autre.

Les exemples suivants illustrent l'invention.

### Exemple 1

(en référence aux fig. 2 à 4 du dessin annexé).

On mélange 6 l de lait écrémé pasteurisé et 1,5 l de crème pasteurisée, de manière à obtenir une teneur en matières grasses de 72 g/l. On effectue le mélange à 26° C et on ajoute des levain acidifiant *Flora danica* et des ferments d'arômes.

On fait maturer pendant 3 h environ dans le récipient 6 représenté à la fig. 2.

On empure ensuite par 0,5 cm³ de présure, entre 21 et 25° C afin d'obtenir un caillé lactique. La durée de caillage est de 22 h environ.

A l'aide d'un tranche-caillé, on découpe des cubes dont l'arête mesure 5 cm environ.

On moule ensuite, sur un store 7 (fig. 3), stérilisé au préalable, dans un cadre 8 métallique à paroi perforée posé sur un plateau d'égouttage. Le caillé est déposé à l'aide d'une poche en acier inoxydable, en veillant bien à ne pas le briser. On égalise bien le caillé avec une spatule et on pose sur le caillé un store stérile avant de placer un plateau d'un poids de 3 kg environ pour comprimer le caillé et obtenir une bonne exsudation. On laisse ainsi égoutter pendant 20 h, à température ambiante.

On démoule ensuite et on sale. On répand en même temps une nappe de fines herbes sur l'une des faces de la couche de caillé, on met un store stérile sur cette face, on retourne le tout et l'on dépose une autre couche de fines herbes sur l'autre face. On dépose environ 20 g de fines herbes.

La teneur en matière sèche du caillé est de 37% en poids. On roule le caillé à l'aide d'un store à la manière d'une bûche pâtissière (fig.4).

On laisse l'égouttage se terminer au réfrigérateur à une température de 5 à 7° C.

Le lendemain, on pose le fromage sur une plaque de polystyrène et on l'enveloppe d'une pellicule thermorétractable en polychlorure de vinyle, puis on fait passer le fromage ainsi emballé dans un tunnel où il est chauffé entre 70 et 75° C environ pendant 5 à 6 s environ. L'enveloppe se rétracte. Le passage au four est suffisamment rapide pour ne pas chauffer le fromage lui-même au point d'en modifier la qualité.

On conserve le fromage emballé entre 4 et 5° C environ.

A la consommation, on constate que la pâte de ce fromage roulé est très onctueuse, se coupe franchement, n'est pas granuleuse, ne s'émiette pas et se tartine facilement. Le goût n'est pas celui de beurre d'escargot, masquant celui du fromage naturel frais, des produits habituels associant une pâte lactée et une épice. Le fromage a un extrait sec de 40% au minimum et pèse 1,7 kg environ.

*Exemple 2*

On mélange 6 l de lait écrémé pasteurisé et 1,5 l de crème pasteurisée, de manière à obtenir une matière grasse de 72 g/l. On additionne de levain acidifiant *Flora danica* et de ferments d'arômes. On effectue un emprésurage en cherchant à obtenir un caillé présuré assez poussé, par l'addition de 2,25 cm³ de présure à une température de 35° C. La température de la salle est de 30° C environ. Le temps de prise est de 10 min environ, le temps de durcissement est de 45 min environ.

A l'aide d'un tranche-caillé, on découpe le caillé en des portions ayant la grosseur d'un grain de maïs. On laisse reposer 10 min, on brasse les grains pendant 5 min. On répète trois fois ces opérations.

On soutire environ 60% de sérum, on lave les grains avec de l'eau légèrement salée à une température de 30° C environ.

On moule et on roule, comme dans l'exemple précédent, sauf que le roulage s'effectue 3 h après le moulage, suivant la rapidité de l'égouttage. L'extrait sec au moment du roulage est de 38%.

Le lendemain, on sale par mise en saumure pendant 30 min. La densité de la saumure est de 1 200. On pulvérise ensuite du *Penicillium candidum*.

On emballe ensuite comme à l'exemple précédent.

On obtient ainsi un fromage à pâte solubilisée qui ressemble à une bûche pâtissière, dont le poids est de 1,5 kg environ, dont la longueur est de 30 cm, dont le diamètre est de 25 cm, dont l'extrait sec est au minimum de 50%, et dont la teneur en matière grasse de l'extrait sec est au minimum de 65%, comme celle du fromage de l'exemple 1.

*Exemple 3*

On mélange les mêmes matières premières qu'à l'exemple 1 de façon à obtenir une teneur en matière grasse de 72 g/l. On effectue le mélange à 32° C, on recherche un caillé présuré en utilisant 1,5 cm³ de présure. Le temps de prise est d'environ 8 à 9 min. Le temps de durcissement est de 50 min. On moule et on roule comme à l'exemple 1, 2½ h après le moulage. L'extrait sec, lors du roulage, est de 39% en poids. On sale comme à l'exemple 2 par mise en saumure pendant 30 min, puis on pulvérise du *Penicillium candidum*, comme à l'exemple 2. On met sous pellicule d'emballage, comme à l'exemple 1.

On obtient un fromage à pâte molle moulé ressemblant à une bûche pâtissière, dont l'extrait sec est au minimum de 50%, dont la teneur en matière grasse sur sec est au minimum de 65%, dont le poids est de 1,5 kg, dont la longueur est de 30 cm et dont le diamètre est de 25 cm.

**Revendications** pour les Etats contractants CH, DE, GB, LI, NL

1. Fromage comprenant une couche de pâte enroulée en spirale, caractérisé en ce que la couche de pâte est en pâte fraîche ou en pâte molle qui n'a subi ni malaxage ni cuisson, et le fromage comprend une nappe d'épice enroulée en spirale, la couche de pâte étant enroulée autour de celle de la nappe et étant en contact avec celle-ci.

2. Fromage suivant la revendication 1, caractérisé par une enveloppe maintenant la spire extérieure de la couche de pâte.

3. Fromage suivant la revendication 2, caractérisé en ce que l'enveloppe est en une matière thermorétractable.

4. Fromage suivant la revendication 3, caractérisé en ce qu'il est porté par une plaque de préférence en matière isolante de la chaleur sous laquelle est ménagée la soudure de l'enveloppe.

5. Procédé de fabrication d'un fromage qui consiste à former une couche d'un seul tenant, non brisée et non malaxée, de pâte fraîche ou de pâte molle, caractérisé en ce qu'il consiste à déposer une nappe d'épice sur la couche et à enrouler en spirale la couche et la nappe.

6. Procédé suivant la revendication 5, caractérisé en ce qu'il consiste à enrouler la couche et la nappe de manière que celle-ci soit entourée par la couche.

7. Procédé suivant l'une des revendications 5 ou 6, caractérisé en ce qu'il consiste à effectuer le roulage avant que le fromage ait atteint la teneur en humidité qu'il doit avoir une fois qu'il est fini.

8. Procédé suivant la revendication 7, caractérisé en ce qu'il consiste à effectuer le roulage alors que l'extrait sec est inférieur à 40%.

**Revendications** pour l'état contractant: AT

1. Procédé de fabrication d'un fromage qui consiste à former une couche d'un seul tenant, non brisée et non malaxée, de pâte fraîche ou de pâte molle, caractérisé en ce qu'il consiste à déposer une nappe d'épice sur la couche et à enrouler en spirale la couche et la nappe.

2. Procédé suivant la revendication 1, caractérisé en ce qu'il consiste à enrouler la couche et la nappe de manière que celle-ci soit entourée par la couche.

3. Procédé suivant l'une des revendications 1 ou 2, caractérisé en ce qu'il consiste à effectuer le roulage avant que le fromage ait atteint la teneur en humidité qu'il doit avoir une fois qu'il est fini.

4. Procédé suivant la revendication 3, caractérisé en ce qu'il consiste à effectuer le roulage alors que l'exrait sec est inférieur à 40%.

**Patentansprüche** für die Vertragsstaaten: CH, DE, GB, LI, NL

1. Käse, der eine in Spiralform aufgewickelte Teigschicht aufweist, dadurch gekennzeichnet, dass die Teigschicht aus frischem Teig oder aus weichem Teig besteht, der weder eine Knetung noch eine Erhitzung erfahren hat, une dass der Käse eine Gewürzlage enthält, die in Spiralform aufgewickelt ist, wobei die Schicht aus Teig um die Lage aus Gewürz gewickelt ist und mit dieser in Berührung steht.

2. Käse nach Anspruch 1, gekennzeichnet durch eine Hülle, welche die äussere Windung der Teigschicht zusammenhält.

3. Käse nach Anspruch 2, dadurch gekennzeichnet, dass die Hülle aus einem thermoschrumpffähigen Material besteht.

4. Käse nach Anspruch 3, dadurch gekennzeichnet, dass er auf einer Platte, vorzugsweise aus wärmedämmendem Material, ruht, unter welcher die Verschweissung der Hülle ausgeführt ist.

5. Verfahren zur Herstellung eines Käses, bei welchem eine einstückige, nicht gebrochene und nicht geknetete Schicht aus frischem Teig oder weichem Teig geformt wird, dadurch gekennzeichnet, dass bei ihm auf die Schicht eine Gewürzlage aufgebracht wird und die Schicht sowie die Lage in Spiralform aufgewickelt werden.

6. Verfahren nach Anspruch 5, dadurch gekennzeichnet, dass die Schicht und die Lage so aufgewickelt werden, dass diese von der Schicht umgeben wird.

7. Verfahren nach einem der beiden Ansprüche 5 oder 6, dadurch gekennzeichnet, dass bei ihm das Aufwickeln durchgeführt wird, bevor der Käse den Wassergehalt erreicht hat, den er nach seiner Fertigstellung aufweisen soll.

8. Verfahren nach Anspruch 7, dadurch gekennzeichnet, dass bei ihm das Aufwickeln durchgeführt wird, während die Trockenmasse weniger als 40% ausmacht.

**Patentansprüche** für den Vertragsstaat: AT

1. Verfahren zur Herstellung eines Käses, bei welchem eine einstückige, nicht gebrochene und nicht geknetete Schicht aus frischem Teig oder weichem Teig geformt wird, dadurch gekennzeichnet, dass bei ihm auf die Schicht eine Gewürzlage aufgebracht wird und die Schicht sowie die Lage in Spiralform aufgewickelt werden.

2. Verfahren nach Anspruch 1, dadurch gekennzeichnet, dass die Schicht und die Lage so aufgewickelt werden, dass diese von der Schicht umgeben wird.

3. Verfahren nach einem der beiden Ansprüche 1 oder 2, dadurch gekennzeichnet, dass bei ihm das Aufwickeln durchgeführt wird, bevor der Käse den Wassergehalt erreicht hat, den er nach seiner Fertigstellung aufweisen soll.

4. Verfahren nach Anspruch 3, dadurch gekennzeichnet, dass bei ihm das Aufwickeln durchgeführt wird, während die Trockenmasse weniger als 40% ausmacht.

**Claims** for the contracting States: CH, DE, GB, LI, NL

1. Cheese comprising a layer of curds rolled into a spiral, characterised in that the layer of curds consists of fresh curds or soft curds which have not undergone any kneading or cooking and the cheese comprises a layer of flavouring rolled into a spiral, the layer of curds being rolled around the layer of flavouring and being in contact therewith.

2. Cheese as claimed in claim 1, characterised by wrapper which holds the outer turn of the layer of curds in place.

3. Cheese as claimed in claim 2, characterised in that the wrapper consists of a heat-shrinkable material.

4. Cheese as claimed in claim 3, characterised in that it is supported on a board or sheet of preferably heat-insulating material below which the weld seam of the wrapper is positioned.

5. Process for producing a cheese, which consists in forming a continuous, unbroken and non-kneaded layer of fresh curds or soft curds, characterised in that it consists in depositing a layer of flavouring on the curds and rolling the layer of curds and layer or flavouring into a spiral.

6. Process as claimed in claim 5, characterised in that the layer of curds and the layer of flavouring are rolled up in such a way that the layer of flavouring is surrounded by the layer of curds.

7. Process as claimed in claim 5 or 6, characterised in that the rolling is effected before the cheese has reached the moisture content which it is required to have when finished.

8. Process as claimed in claim 7, characterised in that the rolling is effected when the dry matter is less than 40%.

**Claims** for the contracting State: AT

1. Process for producing a cheese, which consists in forming a continuous, unbroken and non-kneaded layer of fresh curds or soft curds, characterised in that it consists in depositing a layer of flavouring on the curds and rolling the layer of curds and layer of flavouring into a spiral.

2. Process as claimed in claim 1, characterised in that the layer of curds and the layer of flavouring are rolled up in such a way that the layer of flavouring is surrounded by the layer of curds.

3. Process as claimed in claim 1 or 2, characterised in that the rolling is effected before the cheese has reached the moisture content which it is required to have when finished.

4. Process as claimed in claim 3, characterised in that the rolling is effected when the dry matter is less than 40%.

FIG. 1

FIG. 2

FIG. 3

FIG. 4